(19) Europäisches Patentamt
European Patent Office
Office européen des brevets

(11) EP 4 753 203 A1

(12) EUROPEAN PATENT APPLICATION

(43) Date of publication:
03.06.2026 Bulletin 2026/23

(21) Application number: 24315543.9

(22) Date of filing: 28.11.2024

(51) International Patent Classification (IPC):
*H04L 9/00* (2022.01)

(52) Cooperative Patent Classification (CPC):
H04L 9/008; H04L 2209/12

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Zama SAS
75002 Paris (FR)

(72) Inventors:
• Duflot, Jing-Jing
75002 Paris (FR)
• Roux, Baptiste Olivier
75002 Paris (FR)

(74) Representative: DeltaPatents B.V.
Fellenoord 370
5611 ZL Eindhoven (NL)

(54) HOMOMORPHIC PROCESSING UNIT AND SYSTEM

(57) A homomorphic processing unit (HPU) 200 may accelerate homomorphic processing operations governed by a homomorphic encryption scheme. The HPU may access encrypted operands from memory, wherein an encrypted operand represents an encryption of unencrypted data by the homomorphic encryption scheme, wherein the encrypted operand is represented by a set of ciphertext words. The HPU may include a controller 205 to access instructions for operations to be performed on encrypted operands and convert them into micro-instructions for operations to be performed on ciphertext words. The HPU may further comprise a register memory 209 and multiple execution units that may be invoked in parallel by executing micro-instructions. The execution units may include a load/store unit 207 for transferring ciphertext words, an arithmetic logic unit 210 for performing arithmetic operations, and at least one ciphertext transformation unit 211, 212 configured to modify ciphertext words in compliance with the homomorphic encryption scheme.

Fig. 2

**Description**

**TECHNICAL FIELD**

The presently disclosed subject matter relates to a homomorphic processing unit configured to accelerate homomorphic processing operations governed by a homomorphic encryption scheme. The presently disclosed subject matter further relates to a system comprising the homomorphic processing unit.

**BACKGROUND**

Encryption may be used to protect sensitive data during storage and transfer. Conventional methods, however, require decryption for data processing, which may expose data to potential breaches and complicates secure workflows. Homomorphic encryption allows computations to be performed directly on encrypted data, producing results equivalent to those from operations on unencrypted data, thereby addressing these disadvantages. In encryption, the original unencrypted data is typically called plaintext, and once encrypted, it becomes ciphertext. Homomorphic encryption operates on this ciphertext without exposing the underlying plaintext.

Cryptosystems that support either addition or multiplication on ciphertexts are typically known as partially homomorphic encryption schemes. Fully homomorphic encryption (FHE), however, supports both operations, enabling the execution of a wide range of programs on encrypted data. FHE systems, as well as some partially homomorphic schemes, are typically based on hard lattice problems and implemented on discrete algebraic structures. Ciphertexts in these cryptosystems contain noise to ensure security, but this noise typically increases with each operation. If left unmanaged, excessive noise may render the ciphertext undecipherable.

FHE schemes typically employ ciphertext transformation techniques to ensure ciphertext remains usable during the execution of homomorphic operations, such as bootstrapping and other noise-reduction methods. Bootstrapping resets the noise level, allowing further computations, while leveled schemes limit the number of operations to control noise growth. Another transformation technique is key switching, which converts a ciphertext encrypted under one key into a ciphertext under a different key, often resulting in a more efficient structure for continued computations.

FHE is computationally complex because operations on ciphertext introduce additional noise that may need to be managed. Ciphertext transformation techniques, such as bootstrapping, add significant overhead. Furthermore, the mathematical structures used in FHE, such as lattice problems, are computationally demanding, making an implementation of FHE typically resource-intensive and costly, especially when implemented by general-purpose CPU or GPUs which are otherwise not optimized in their design for the specific cryptographic operations required in FHE.

It is desirable to accelerate at least part of the FHE computations using a hardware (HW) accelerator. HW accelerators may greatly improve the efficiency of FHE by optimizing resource-heavy operations. The use of HW accelerators may enable faster computation times, reduced latency, and lower energy consumption compared to implementations relying solely on general-purpose CPUs or GPUs.

Accelerators for FHE are known per se and known accelerators may be categorized into four main types:
Primitive accelerators: These accelerators focus on specific FHE primitives such as bootstrapping, relinearization, NTT, or FFT, which may be critical to the performance of many FHE schemes. Examples include [2], [3], [4], [5], [6], [9], [10], [12].

High-level FHE accelerators: These designs recognize the need for FHE acceleration but focus on broader, high-level solutions such as stateless designs [11].

General-purpose accelerators: These flexible accelerators support a variety of cryptographic workloads, including FHE, though they are not exclusively optimized for FHE schemes. Examples include [7], [13].

Large-scale FHE scheme accelerators: Tailored for large-scale FHE schemes like BGV and CKKS, these accelerators emphasize high throughput and efficiently handle tasks such as bootstrapping and large ciphertext processing [1], [8].

It would be desirable to be able to further improve FHE acceleration.

**References**

[1] BASALICS: Programmable Hardware Accelerator for BGV Fully Homomorphic Encryption. https://eprint.iacr.org/2022/657.pdf
[2] Hardware Acceleration of FHEW. https://eprint.iacr.org/2023/618.pdf
[3] FPT: a Fixed-Point Accelerator for Torus Fully Homomorphic Encryption. https://eprint.iacr.org/2022/1635
[4] MATCHA: A Fast and Energy-Efficient Accelerator for Fully Homomorphic Encryption over the Torus. https://arxiv.org/abs/2202.08814

[5] F1: A Fast and Programmable Accelerator for Fully Homomorphic Encryption. https://di.acm.org/doi/fullHtml/10.1145/3466752.3480070

[6] TREBUCHET: Fully Homomorphic Encryption Accelerator for Deep Computation. https://arxiv.org/abs/2304.05237

[7] VPU: Verifiable Processing Unit. https://www.fabriccryptography.com/

[8] REED: Chiplet-Based CKKS Accelerator. https://eprint.iacr.org/2023/1190.pdf

[9] US 20240056286 A1: Homomorphic Encryption Calculating Accelerator and Encryption System.

[10] US 20240022393 A1: Accelerator Device and Operating Method of Accelerator Device.

[11] US 20210111863 A1: Enabling Stateless Accelerator Designs Shared Across Mutually-Distrustful Tenants.

[12] US 20230327849 A1: Apparatus and Method with Homomorphic Encryption Operation.

[13] US 20230216655 A1: Field-Programmable Gate Array (FPGA) Clusters and Methods of Using an FPGA Cluster for Homomorphic Encryption Acceleration.

[14] US 20200213079 A1: Method and Apparatus for Configuring a Reduced Instruction Set Computer Processor Architecture to Execute a Fully Homomorphic Encryption Algorithm.

## SUMMARY

In a first aspect of the presently disclosed subject matter, a homomorphic processing unit is provided which is configured to accelerate homomorphic processing operations governed by a homomorphic encryption scheme, wherein the homomorphic encryption scheme is parameterized by a parameter set, the homomorphic processing unit comprising:

- a memory interface to a memory configured to store encrypted operands, wherein an encrypted operand represents an encryption of unencrypted data by the homomorphic encryption scheme, wherein the encrypted operand is represented by a set of ciphertext words, each ciphertext word encoding a portion of the unencrypted data and having a size determined by the parameter set;
- a controller configured to access instructions for the homomorphic processing unit to perform operations on a respective encrypted operand, wherein the controller is further configured to convert the instructions into micro-instructions for execution units of the homomorphic processing unit to perform operations on ciphertext words of the respective encrypted operand;
- a register memory configured to store one or more ciphertext words;
- a plurality of execution units which are separately and in parallel invokable by execution of respective micro-instructions, the plurality of execution units comprising:

  - a load/store unit configured to transfer ciphertext words between the memory and the register memory;
  - an arithmetic logic unit configured to perform arithmetic operations on ciphertext words stored in the register memory; and
  - at least one ciphertext transformation unit configured to modify ciphertext words stored in the register memory in compliance with a structure of the ciphertext words, as defined by the homomorphic encryption scheme, to maintain usability of the ciphertext words during the execution of the homomorphic processing operations.

The above measures provide a homomorphic processing unit (HPU), which may be implemented in hardware, for example as an ASIC or FPGA. The HPU serves as an accelerator to improve the efficiency of homomorphic encryption (HE) operations for a particular FHE scheme. An instance of the HPU, e.g., an implementation in hardware, is therefore tailored, at least to some degree, to the particular FHE scheme, which may be any type of FHE scheme as outlined elsewhere in this specification.

As is generally known, a homomorphic encryption scheme may be parameterized by a parameter set, meaning that encryption properties, such as security level, computational efficiency, and data capacity, may be defined by parameters. For example, a parameter set may specify modulus size, key-switching requirements, noise levels, and scaling factors for a particular homomorphic encryption scheme. Once these parameters are selected, the homomorphic encryption scheme may be applied to unencrypted data to yield one or more encrypted operands. Here, each operand may represent encrypted data at a level of granularity suitable for performing operations on the encrypted data, with the size depending on application requirements. Each operand may be represented by a set of ciphertext words, where each ciphertext word encodes a portion of the unencrypted data and has a size determined by the parameter set. For example, an encrypted operand may encode 64 bits of unencrypted data, with each ciphertext word encrypting 2 bits of the data, meaning the operand may be represented by 32 ciphertext words. The number of bits of unencrypted data encoded by each ciphertext word may be determined at least in part by the parameter set.

The tailoring of the HPU to a particular FHE scheme may comprise the following. Unlike a traditional CPU, the components of the HPU, such as the arithmetic logic unit (ALU), register memory, and controller, may be specifically designed to operate on the ciphertext words of the FHE scheme in accordance with at least one selected parameter set. This tailoring may involve designing the HPU prior to hardware instantiation to support word sizes that either exactly correspond to or exceed the size of the ciphertext words defined by the FHE scheme's parameter set. While FHE ciphertexts typically encode a limited amount of data, such as 1, 2, 4, 32 or more bits, the ciphertexts themselves are often significantly larger in size, for example a kilobit or several kilobits (e.g., 2, 4, 8, 16, 32 kbits), or even up to several megabits (e.g., 1, 2, or 4 Mbits), depending on the FHE scheme and the specific parameter set. The HPU may be designed to natively support these sizeable ciphertext words. This may include providing intermediate storage capacity (e.g., in register memory), loading and storing mechanisms for such ciphertext words, and execution units that operate directly on ciphertext words rather than on smaller units, such as the standard 64-bit words of general-purpose CPUs. As elucidated above, the HPU may receive instructions defining operations on encrypted operands. To support the execution of these operations by the HPU, a controller is provided which converts these instructions into micro-instructions at the ciphertext word level. The controller may thus translate instructions pertaining to an entire operand into multiple instructions targeting the individual ciphertext words. The design of the HPU as instantiated in hardware may thus support at least one parameter set. Optionally, the HPU as instantiated may support multiple parameter sets, in which case the design of the HPU, e.g., in terms of word size, may be governed by the parameter set with the largest ciphertext word.

Accordingly, the register memory is configured to directly store ciphertext words, which minimizes the need to constantly retrieve ciphertexts from the main memory. This may reduce impacts of memory access latency and improve the overall efficiency of computation. Moreover, the ALU is configured to perform arithmetic operations, such as additions and multiplications, directly on the ciphertext words held in the register memory,. Additionally, the ciphertext transformation unit (CTU) also directly operates on the ciphertext words held in the register memory and is configured to modify ciphertexts in accordance with the specific structure of the FHE scheme as configured by the parameter set. Specifically, the CTU ensures that the ciphertexts remain compliant and usable throughout the homomorphic processing. It is noted that while the register memory, ALU, and other execution units such as the load/store unit may handle ciphertext words agnostically by treating them as generic data based on their word size and requiring only configuration to match the word size of the ciphertext in the FHE scheme, the CTU is specifically configured to perform modifications according to the structural requirements of the particular FHE scheme. For example, the CTU may account for the encryption scheme's parameters defined by the selected parameter set, such as modulus size, key-switching requirements, noise levels, and scaling factors.

The HPU further allows for the independent execution of its execution units, such as the ALU and CTU, enabling parallel execution of multiple operations. This parallelism is highly advantageous in homomorphic encryption, where computational demands are substantial. The ability to handle several operations concurrently reduces processing time and increases throughput. To manage this parallelism, the controller converts high-level instructions, as for example received from a CPU, into micro-instructions to trigger independent execution of individual execution units.

The HPU according to the presently disclosed measures is configured to operate at a level of granularity which balances between low-level and high-level primitives. Implementing low-level primitives would necessitate significant software management, thereby increasing instruction handling overhead. Instead, the HPU operates directly at the level of ciphertext words, allowing the ALU and CTU to directly and independently execute their respective operations on the ciphertext words. This enables a CPU or similar control unit to issue high-level instructions, reducing the need for complex command structures, while the HPU may efficiently manage the detailed execution. The independent and parallel operation of the ALU and CTU allows the HPU to process FHE operations with higher throughput, reducing the delays and overhead typically encountered in software-driven execution. Thus, by natively supporting the word sizes specific to the FHE scheme and parameter set, enabling parallel execution across multiple functional units, and minimizing data movement and instruction complexity, the HPU improves the efficiency of homomorphic encryption operations.

Optionally, the at least one ciphertext transformation unit comprises a pipeline composed of a plurality of stages to enable multiple ciphertext words to be processed in parallel across the plurality of stages of the pipeline, wherein the pipeline comprises an input stage, and wherein the controller is configured to generate the micro-instructions to invoke execution of the at least one ciphertext transformation unit when the input stage is ready to receive a ciphertext word. Ciphertext transformation is typically computationally complex, often requiring several algorithmic steps that may lead to lengthy execution times and reduced throughput. The CTU as described above uses a pipelined architecture that enables multiple ciphertext words to be processed in parallel at different stages of its pipeline. For that purpose, the pipeline comprises several stages, starting with an input stage. Individual stages may be configured to perform respective parts of the overall ciphertext transformation. For example, stages may implement the functionality of individual algorithmic steps. To operate the CTU in this pipelined manner, the controller is configured to generate micro-instructions that invoke the CTU when the input stage is ready to receive a new ciphertext word. This parallelism increases the processing rate by allowing different stages of the pipeline to handle different ciphertext words simultaneously. As such, the overall execution time of homomorphic encryption operations may be reduced, improving throughput and processing efficiency.

Optionally, the pipeline comprises one or more of: a key-switching or re-linearization stage, a modulus switch stage, and a bootstrapping stage configured to refresh ciphertext words. These stages, which may for example be part of a larger bootstrapping unit, may represent distinct algorithmic steps in a ciphertext transformation. An advantage of a pipeline at such a level of granularity, with distinct stages for key-switching or re-linearization, modulus switching, and/or bootstrapping, is that there are enough stages to obtain parallelism in the cipher text transformation but without introducing so many that execution becomes overly complicated or inflexible, which may otherwise hinder scheduling by the controller.

Optionally, the bootstrapping stage is configured to evaluate a function as part of a bootstrapping process. In this context, a 'function' may refer to a mathematical operation that is homomorphically evaluated on encrypted data during the bootstrapping process. Examples of such functions include, but are not limited to, identity functions, comparisons, sign extraction, multiplication functions.

Optionally, the key-switching or re-linearization stage is configured to provide coefficients to the bootstrapping stage at a rate that prevents stalls in the pipeline at the bootstrapping stage. Bootstrapping is a computationally complex stage and may often limit overall throughput. By configuring the key-switching or re-linearization stage to provide coefficients at a rate specifically matched to the throughput of the bootstrapping stage, potential stalls may be avoided, ensuring efficient use of the bootstrapping stage and maintaining consistent throughput.

Optionally, the at least one ciphertext transformation unit is or comprises a bootstrapping unit configured to refresh ciphertext words. The overall ciphertext transformation unit may function as a bootstrapping unit in that it may perform operations to restore the ciphertext to a usable state for further homomorphic computations, for example by managing scale and modulus levels in FHE schemes such as Cheon-Kim-Kim-Song (CKKS) or by reducing noise in other FHE schemes.

Optionally, the at least one ciphertext transformation unit further comprises a separately invokable key-switching or re-linearization unit. By having the key-switching or re-linearization unit separately invokable, it may be executed independently of bootstrapping operations, which is relevant for certain FHE schemes.

Optionally, at least one of the plurality of execution units is configured to:

- access one or more encryption parameters of the homomorphic encryption scheme that influence the structure of the ciphertext words; and
- adapt, at runtime, its operation to the structure of the ciphertext words based on the one or more encryption parameters.

While the CTU is designed to perform operations tailored to the structural requirements of a specific FHE scheme, meaning its implementation within the HPU is typically fixed and dictated by the structure of the ciphertext, a degree of flexibility may be introduced by allowing the CTU to adapt to the ciphertext word structure at runtime. This flexibility may be achieved by accessing encryption parameters such as the number $k$ of polynomials composing the ciphertext words, the degree $N$ of these polynomials, and the number of bits $q$ used for the polynomial coefficients. These parameters may define the size and structure of the ciphertext words, and the CTU may adjust its operations accordingly. For example, the HPU may be designed to support the largest parameter sets among several FHE scheme variants by incorporating the union of the required ciphertext word functions. Each variant typically defines different values for parameters such as the aforementioned $k$, N, and $q$, for example to satisfy different security and performance requirements, with such parameters directly influencing the size and complexity of the ciphertext words. By configuring the HPU to handle the largest $k$, $N$, and $q$ values amongst the variants, the same HPU instance may efficiently process both resource-intensive and simpler variants. For example, the CTU of such an HPU may adapt its operations to accommodate changes in these parameters during key-switching or modulus switching. This flexibility allows the same HPU instance to support different variants of the same FHE scheme with the same ciphertext word size but differing encryption parameters, enabling a single HPU implementation to handle multiple scheme variants.

Optionally, the controller is configured to schedule the execution of the plurality of execution units in parallel to optimize utilization of available execution units. The ability to schedule several operations concurrently using the execution units reduces processing time and increases throughput.

Optionally, the plurality of execution units comprises multiple instances of a same type of execution unit, such as multiple instances of the arithmetic logic unit and/or multiple instances of a ciphertext transformation unit. For example, several ALUs and/or CTUs may be used to accelerate operations through parallelism. For example, in an FHE operation that requires multiple multiplications or ciphertext transformations, each instance of the ALU or CTU may independently perform its operation on a different part of the data set, thereby significantly reducing the overall computation time compared to sequential processing by a single ALU or CTU.

Optionally, the memory further stores homomorphic encryption data, such as keys for bootstrapping, re-encryption, or key-switching operations, and/or look-up tables, wherein the at least one ciphertext transformation unit is configured to retrieve the homomorphic encryption data from the memory for use in homomorphic processing operations.

Optionally, the memory is on-chip with the homomorphic processing unit. On-chip memory typically offers higher bandwidth and lower-latency memory access, improving data transfer speeds and overall processing efficiency.

Optionally, the memory is off-chip with the homomorphic processing unit. Off-chip memory, such as DDR4 or GDDR5, may be more cost-effective than on-chip memory while still providing sufficient bandwidth and latency for certain applications.

In a first aspect of the presently disclosed subject matter, a system is provided comprising the homomorphic processing unit. The HPU may be integrated into a system, such as a computer, to accelerate FHE operations for the system.

Optionally, the system comprises a central processing unit configured to generate the ciphertext words for the homomorphic processing unit and to retrieve resulting processed ciphertext words from the homomorphic processing unit. A CPU may be programmed to execute a larger operation that integrates FHE operations. For example, the CPU may be a x86-based CPU, an ARM-based CPU, or a RISC-V based CPU. To enable software running on the CPU to utilize the HPU for accelerating the FHE operations, an FHE software library may be used. The FHE software library may for example provide high-level access to FHE functions. Once FHE operations are initiated, they may be independently executed on the HPU, minimizing the need for frequent data transfers between the CPU and HPU. This reduces data movement between the CPU and the HPU, which is otherwise slow and may hinder performance.

Optionally, the system comprises multiple instances of the homomorphic processing unit, wherein the multiple instances of the homomorphic processing unit are configured to jointly perform the homomorphic processing operations. Multiple HPUs allow homomorphic processing operations to be performed faster, for example by exploiting parallelism, where different HPUs handle separate portions of the encrypted data simultaneously. The ability for HPUs to cooperate, for example by operating in parallel, may also allow for scaling to handle more complex applications by adding additional HPUs as required. In some examples, multiple HPUs may communicate directly, bypassing the system's main memory (e.g., a memory used by the system's CPU). For example, the system may comprise a high-speed interconnect or dedicated data channels between the HPUs to enable direct communication. This may reduce memory access latency and minimize the overhead associated with data transfers, resulting in improved overall throughput in homomorphic computations.

It will be appreciated by those skilled in the art that two or more of the above-mentioned embodiments, implementations, and/or aspects of the invention may be combined in any way deemed useful.

Modifications and variations of homomorphic processing unit and the system, which correspond to the described modifications and variations of another one of these entities, may be carried out by a person skilled in the art on the basis of the present description.

## BRIEF DESCRIPTION OF THE DRAWINGS

Further details, aspects, and embodiments will be described, by way of example, with reference to the drawings. Elements in the figures are illustrated for simplicity and clarity and have not necessarily been drawn to scale. In the Figures, elements which correspond to elements already described may have the same reference numerals. In the drawings,

Fig. 1 shows a system which comprises a CPU and an HPU configured to accelerate homomorphic processing operations;

Fig. 2 shows an HPU configured for an exemplary FHE scheme, detailing its internal structure and processing elements that execute encrypted data operations;

Fig. 3 shows a HPU controller translating instructions received from the CPU into micro-instructions and managing their execution;

Fig. 4 shows an example of a Homomorphic Processing Element (HPE) implementing programmable bootstrapping (PBS) for the TFHE scheme;

Fig. 5 illustrates an optimized processing of accumulator polynomials through a number theoretic transform (NTT) processing pipeline;

Fig. 6 illustrates two approaches to batch processing in PBS HPE: Batch PBS Insertion in Pipe (BPIP) and Instant PBS Insertion in Pipe (IPIP); and

Fig. 7 shows an example of a PBS-HPE for an NTRU-based FHE scheme.

## Reference signs list

The following list of references and abbreviations is provided for facilitating the interpretation of the drawings and shall not be construed as limiting the claims.

ALU       arithmetic logic unit
ASIC      application-specific integrated circuit
BGV       brakerski-gentry-vaikuntanathan (FHE scheme)

| | |
|---|---|
| CKKS | cheon-kim-kim-song (FHE scheme) |
| CMUX | controlled multiplexer |
| CPU | central processing unit |
| CRT | chinese remainder theorem |
| FFT | fast fourier transform |
| FHE | fully homomorphic encryption |
| FHEW | fast fully homomorphic encryption over the torus |
| FPGA | field-programmable gate array |
| HPE | homomorphic processing element |
| HPU | homomorphic processing unit |
| KSK | key-switching key |
| LUT | look-up table |
| INTT | inverse number theoretic transform |
| MMACC | monomial multiplier accumulator |
| NTT | number theoretic transform |
| PBS | programmable bootstrapping |
| PCIe | peripheral component interconnect express |
| PE | processing element |
| RPU | ring processing unit |
| SDF | single-path delay feedback |
| TFHE | torus fully homomorphic encryption |
| VPU | verifiable processing unit |
| ZKP | zero knowledge proofs |
| 100 | system |
| 101 | CPU |
| 102 | FHE software library |
| 103 | application |
| 104 | HPU |
| 105 | instructions |
| 106 | encrypted operands |
| 107 | encrypted result |
| 200 | HPU |
| 201 | keys and LUTs |
| 202 | main memory |
| 203 | FHE encrypted operands |
| 204 | instructions |
| 205 | HPU controller |
| 206 | micro-instructions |
| 207 | load-store HPE |
| 208 | ciphertext words |
| 209 | register file |
| 210 | ALU HPE |
| 211 | bootstrapping HPE |
| 212 | key-switching HPE |
| 213 | heap memory |
| 214 | instruction acknowledge |
| 300 | HPU controller |
| 301 | instruction translator |
| 302 | input instruction |
| 303 | micro-instructions |
| 304 | instruction micro-code firmware |
| 305 | instruction scheduler |
| 306 | load-store HPE |
| 307 | HPE |
| 400 | PBS HPE |
| 401 | input ciphertext word |
| 402 | key-switching HPE |
| 403 | main memory |

| 404 | KSK cache |
|---|---|
| 405 | modulus switch |
| 406 | mask and body coefficients |
| 407 | accumulator memory |
| 408 | MMACC |
| 409 | rotation module |
| 410 | subtraction operator |
| 411 | accumulation operator |
| 412 | decomposition module |
| 413 | NTT module |
| 414 | accumulation module |
| 415 | BSK cache |
| 416 | INTT module |
| 417 | sample extraction module |
| 418 | output ciphertext word |
| 500 | PBS HPE (final scheme) |
| 501 | input final ciphertext word |
| 502 | key-switching module |
| 503 | main memory |
| 504 | KSK cache |
| 505 | modulus switch |
| 506 | coefficients of ciphertext word |
| 507 | accumulator memories |
| 508 | MMACC |
| 509 | rotation module |
| 510 | subtraction operator |
| 511 | accumulation operator |
| 512 | decomposition module |
| 513 | NTT module |
| 514 | multiplication and intermediate accumulation module |
| 515 | cache |
| 516 | INTT module |
| 517 | sample extraction module |
| 518 | output ciphertext word |

## DETAILED DESCRIPTION OF EMBODIMENTS

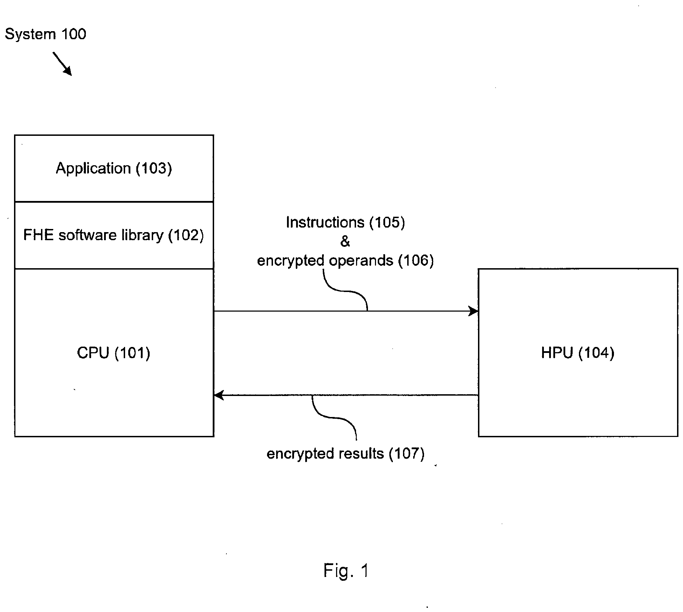

**Fig. 1** illustrates an example of a system 100 that may be configured to accelerate Fully Homomorphic Encryption (FHE) processing operations on encrypted operands in accordance with some embodiments. In system 100, CPU 101 may be any type of central processing unit capable of executing software. In some embodiments, this software may comprise an FHE software library 102, which may implement basic functions of an FHE encryption scheme. These functions may for example include generating a bootstrapping key or encrypting a 64-bit operand using radix or Chinese Remainder Theorem (CRT) representation. Additionally, the software may include an application 103, which may use the FHE software library 102 to provide services to local or remote users. CPU 101 may be connected to at least one Homomorphic Processing Unit (HPU) 104 through any type of physical connection, such as PCIe, Ethernet, or Fiber-Channel lanes. HPU 104 may be implemented using one or more FPGAs, ASICs, or other forms of digital logic hardware, in accordance with various embodiments. The system 100 may, for example, be a computer such as a server, a workstation, a desktop PC, a laptop, an embedded computer, a cloud computing platform, or any other type of device or apparatus, such as an Internet of Things (IoT) device, a mobile device, a secure enclave, a cryptographic hardware module, or a distributed computing system, that is capable of performing operations using Fully Homomorphic Encryption (FHE). Embodiments of the system 100 may be deployed in various environments, including secure data processing, confidential cloud computing, encrypted databases, or privacy-preserving machine learning tasks.

The HPU 104 may initially be configured by the FHE software library 102 running on CPU 101. This first configuration step may provide general environment parameters to HPU 104, which may be independent of the application. Following this, an application-specific configuration may be performed. This configuration step may include loading bootstrapping keys, key-switch keys, and micro-instructions, which may be associated with custom instructions at the operand level. The configuration step may be repeated if the user needs to modify the application characteristics.

Once the configuration is complete, HPU 104 may be ready to process instructions on encrypted operands. HPU

8

104 may receive a stream of instructions 105 from CPU 101, along with encrypted operands 106. HPU 104 may execute the instructions 105 on the encrypted operands 106, for example using preloaded keys and using micro-instructions derived from the instructions 105. At the completion of the execution, HPU 104 may send an encrypted result 107 back to CPU 101. During the entire execution process by HPU 104, the operands may remain encrypted.

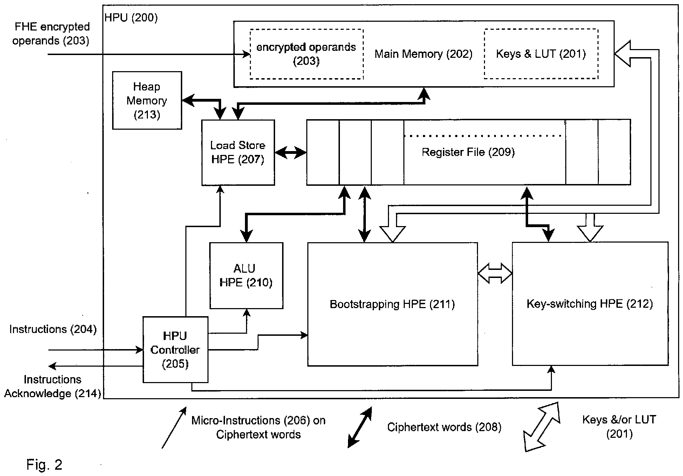

**Fig. 2** is a block diagram illustrating an example of an HPU 200 that may be included in system 100. Before starting the processing of input instructions, HPU 200 may be configured. The configuration may be divided into two steps. A first step may define the general working environment for HPU 200 and may be performed once, for example after the HPU has been reset. A second step may be application-specific and may involve loading HPU 200 with the variables required by the application. These variables may include key-switching and/or bootstrapping keys, and look-up tables (LUT) 201, which may be used if an FHE scheme with Programmable Bootstrapping (PBS) is being implemented. Both the keys and the LUT 201 may be stored in main memory 202, along with any custom micro-code. This second configuration step may be repeated if variable values need to be changed without resetting HPU 200.

After the configuration steps, HPU 200 may receive a set of FHE-encrypted operands 203 into its main memory 202. These encrypted operands 203 may serve as the operands for instructions 204. The encrypted operands 203 may have been encrypted on the CPU or remotely on another machine, and may be represented as a list of ciphertext words, with each word encrypting part of an operand. The stream of instructions 204 may be sent to a HPU controller 205, which may read the instructions 204 and generate corresponding micro-instructions 206 for the various HPU Processing Elements (HPE). The HPU controller 205 may be an example of a controller as described elsewhere in this specification. The HPE may elsewhere in this specification also be referred to as 'execution units', and both terms may be used interchangeably. Certain types of HPE may be ciphertext transformation units (CTU) as described elsewhere in this specification. For example, the bootstrapping HPE 211 and the key-switching HPE 212 as described in the following may be examples of a CTU. The micro-instructions 206 may describe operations to be performed on the ciphertext words 208 that compose the encrypted operand 203.

An example of a processing element may be the load-store HPE 207, which is likely to be used first as the load store HPE handles the transfer of ciphertext words 208 between the main memory 202 and the register file 209 (elsewhere also referred to as register memory). The ciphertext words 208 may then be read from register file 209 by one of three primary processing elements: an Arithmetic Logic Unit HPE 210 (ALU HPE), a bootstrapping HPE 211, or a key-switching HPE 212. These processing elements may handle the actual processing of the ciphertext words 208. The bootstrapping HPE 211 and the key-switching HPE 212 may have direct connections to the main memory 202 to load the keys and LUT 201 for their respective operations.

In some cases, the number of locations in register file 209 may not be sufficient for the complete computation. In such cases, intermediate ciphertext words that are not immediately needed may be temporarily stored in heap memory 213 through the load-store HPE 207. If a result, whether intermediate or final, needs to be retrieved by the CPU, the micro-code may contain a micro-instruction directing the result to be stored in the main memory 202 at a specific address. Once the result is stored, the load-store HPE 207 may notify the HPU controller 205 that the result is complete. The HPU controller 205 may then send an instruction acknowledgment 214 to the CPU or other external entity, indicating that the result is ready for retrieval.

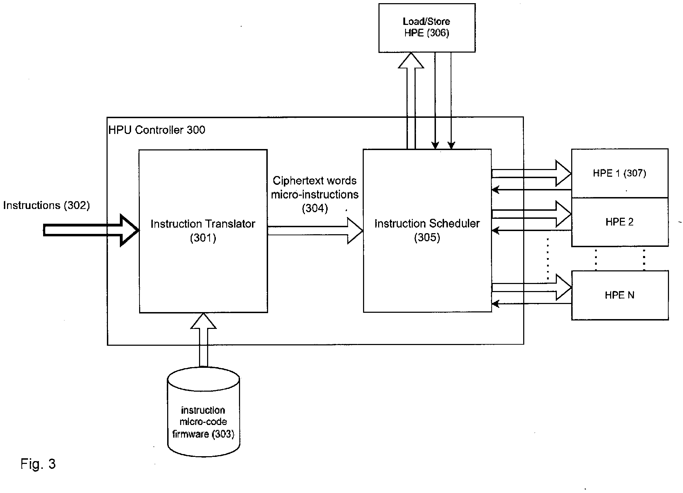

**Fig. 3** illustrates an example of an HPU controller 300 that may be included in HPU 200. In this example, the HPU controller 300 may be divided into two blocks, each responsible for distinct functions: preparing the list of micro-instructions for each instruction and scheduling these micro-instructions to the processing elements. By way of the HPU controller 300, an instruction 302 may be converted into an instruction micro-code composed of a list of micro-instructions. The first block, which may be referred to as instruction translator 301, may translate any input instruction 302, which describes operations on the input operands, into a list of micro-instructions 304, which describe operations on the ciphertext words. The instruction micro-code firmware 303 may be stored in memory, and the translation process may involve reading the micro-code from the correct memory address. The instruction translator 301 may also interpret the micro-instructions, which may involve updating or expanding certain micro-instructions or looping through parts of the list. The interpreted micro-instructions 304 may then be sent to the instruction scheduler 305, which may be connected to all the HPU processing elements 306, 307. Each micro-instruction 304 may be directed to a specific type of HPU processing element (HPE). For example, load and store micro-instructions may be sent to the load-store HPE, subtraction micro-instructions to an ALU HPE, and bootstrapping micro-instructions to the bootstrapping HPE. Since all these HPEs may operate in parallel, the micro-instructions may also be executed in parallel. The instruction scheduler 305 may thus maximize the parallel execution of the micro-instructions while ensuring coherence among the micro-instructions, for example by maintaining proper sequencing and synchronization of operations, particularly with respect to data dependencies. A specific example is that a load into register $n$ may need to be completed before a HPE starts processing the ciphertext word stored in register $n$, and a store operation at address $A$ in heap memory may need to be finished before reading back from address A. Furthermore, register $n$ may not be overwritten as long as micro-instructions are reading or waiting to read from the register $n$.

The process of maximizing parallelism while ensuring coherence may be referred to as scheduling. The instruction scheduler 305 may have access to a window of sequential micro-instructions 304, which may include both current micro-instructions and future ones. The depth of this look-ahead window may impact performance, and is preferably larger than the maximum number of micro-instructions that may be executed in parallel by the HPU. For example, as described later, the bootstrapping HPE may typically operate on a set of ciphertext words known as a batch and may store several batches. To ensure adequate performance, the look-ahead window may be larger than the number of bootstrapping micro-instructions that the bootstrapping HPE may store. The instruction scheduler 305 may use a data structure that retains, for each micro-instruction in the window, characteristics and status (e.g., type, input and output registers or addresses, current state) to enable making scheduling decisions.

With continued reference to Fig. 2, it is noted that in FHE schemes based on the hardness of the 'learning with errors' (LWE) or NTRU problem, the encrypted operands may be represented as a set of ciphertext words. These ciphertext words may take a specific mathematical form according to the mathematical function to which the ciphertext words are currently subjected. These forms include vectors and polynomials, both of which may be composed of coefficients. These coefficients may be integers of any size, starting from a 1-bit integer. The ALU HPE 210 may be a dedicated logic unit that may execute all the micro-instructions corresponding to arithmetic operations on the ciphertext word. The execution of each such micro-instruction may comprise applying the same arithmetic operation to each coefficient composing the ciphertext word. For example, the addition of two ciphertext words may involve adding each coefficient of the right-hand-side ciphertext word to the corresponding coefficient of the left-hand-side ciphertext word. This principle may also apply to subtraction of two ciphertext words, addition or subtraction of a ciphertext word with a scalar value, multiplication of a ciphertext word by a scalar value, and accumulation with another ciphertext word. The operations on the coefficients of the ciphertext word may be parallelized and pipelined as needed to optimize throughput and latency, for example based on the available hardware resources for the ALU HPE 210. With continued reference to Fig. 3, it is noted that the ALU HPE may receive a stream of micro-instructions from the instruction scheduler 305. Examples of micro-instructions may include operations such as 'ADD R1 R2 R3', which instructs the ALU HPE to add the contents of registers R2 and R3 and store the result in register R1, or 'MACC R3 R8 R5 4', which represents a multiply-accumulate operation, multiplying the contents of register R8 by 4, and adding the result to the value in register R5, with the final sum stored in register R3. For each micro-instruction, the ALU HPE may read the input ciphertext words from the register file and write the resulting ciphertext word back into the register file.

The HPU architecture described in this specification, for example with reference to Figs. 1-3, may be used to accelerate various FHE schemes. A specific embodiment of the HPU may accelerate Torus Fully Homomorphic Encryption (TFHE). The primary specificity of TFHE is its Programmable Bootstrapping (PBS) feature. PBS may enable the application of any univariate or multivariate function, described in the form of a Look-Up Table (LUT), to a ciphertext word during the noise reduction process. In a TFHE-specific embodiment of the HPU, the key-switching processing element may be used exclusively in conjunction with the bootstrapping HPE, which may also be referred to as Programmable Bootstrapping HPE (PBS HPE).

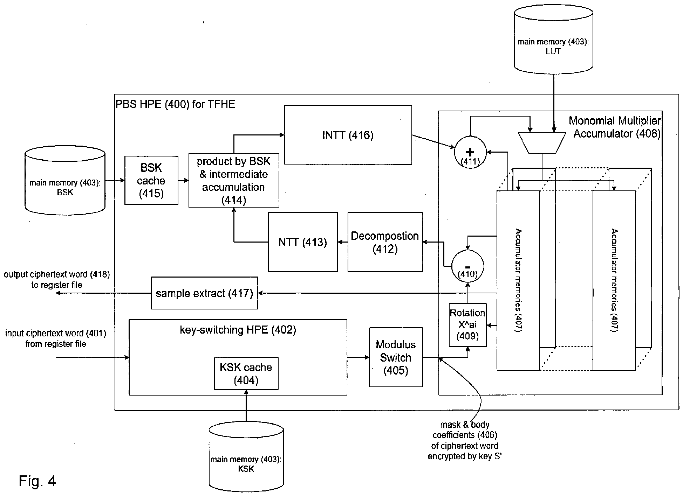

**Fig. 4** illustrates an example of a Programmable Bootstrapping Homomorphic Processing Element (PBS HPE) 400 implementing programmable bootstrapping (PBS) using a Controlled Multiplexer (CMUX)-based blind-rotation. The input ciphertext word 401, stored in the register file, may enter the PBS HPE 400 through the Key-Switching HPE 402 (KS HPE). The KS HPE 402 may decompose the input ciphertext word 401 and perform a polynomial inner-product of each decomposed level with the key-switching key (KSK), which may be partially loaded from the main memory 403 into a KSK cache 404. The size of KSK cache 404 may be optimized to hide the latency of reading from main memory 403. The ciphertext word may comprise one or more mask polynomials and one body polynomial (which may be constant polynomial) which contains part of the encrypted operand. Each ciphertext word may have been encrypted using a key $S$, which may be a polynomial of binary coefficients. The KSK may represent an encryption of the main key $S$ by another key $S'$. After processing by KS HPE 402, a modulus switch 405 may be applied to the mask and body coefficients 406 of the ciphertext word. This modulus switch 405 operation transforms, e.g., by compressing, these coefficients from KS modulus into a smaller modulus. The obtained values are used as rotation factors of the polynomials. These smaller coefficients, referred to as $a_i$ and $b$, may now be a modulus switched LWE encryption of the same part of the encrypted operand contained in ciphertext word 401, but now using key $S'$. The Bootstrapping Key (BSK), described later as an encryption of $S'$ using $S$, and KSK, work together as a pair. HPU 400 may handle encrypted operands associated with different key pairs, but for performance reasons, frequent switching of key pairs may not be preferred. In parallel with key-switching, a Look-Up Table (LUT) representing the function to be applied to the message encrypted in the ciphertext word may be loaded from main memory 403 into one of the accumulator memories 407 of the Monomial Multiplier Accumulator (MMACC) 408. The LUT may be in the form of a General Learning With Errors (GLWE) representation, which may comprise one body polynomial and a set of mask polynomials, potentially only one. The MMACC 408 may manage each CMUX iteration during the blind-rotation process, and accumulator memory 407 may store the result of each CMUX operation.

The LWE representation of the ciphertext word encrypted using key $S'$ (a polynomial with binary coefficients $s_i'$) may comprise a set of mask coefficients ($a_i$) and a body coefficient ($b$) which may be defined by the formula:

$$b = \sum_{i=0}^{n-1} a_i * s'_i + \Delta\,m + e$$

where $m$ represents the message, re-scaled by a $\Delta$ factor, and $e$ is an error term typically sampled from a Gaussian distribution. The goal of this process is to homomorphically execute the decryption algorithm, $b - \sum_{i=0}^{n-1} a_i * s'_i$, on the ciphertext word to reduce noise. In TFHE, this may be achieved by performing a blind-rotation of the LUT based on the encrypted message m contained in ciphertext word 401. Upon completing the blind-rotation, an encryption of LUT(m) may be present in the constant position of the accumulator. To achieve this, PBS HPE 400 may rotate the accumulator polynomials by a monomial:

$$X^{-b+\sum_{i=0}^{n-1} a_i * s'_i} = X^{-(\Delta\,m+e)}$$

The rotation of the accumulator ($Acc$), initialized with the LUT, by each $X^{a_i * s'_i}$ may be carried out by a CMUX. Based on the value of the secret bit $s'_i$, the CMUX may select between the current accumulator state and the accumulator rotated by $X^{a_i}$. The operation may be expressed as:

$$Acc_{i+1} = Acc_i.X^{a_i * s'_i} = s'_i * Acc_i.X^{a_i} + (1 - s'_i) * Acc_i$$
$$= Acc_i + s'_i * (Acc_i.X^{a_i} - Acc_i)$$

Using the LWE coefficients 406 from KS HPE 402, the MMACC 408 may execute the accumulator rotation ($Acc_i * X^{a_i}$) in module 409, perform the subtraction $Acc_i * X^{a_i} - Acc_i$ in operator 410, and accumulate the result $Acc_i + s'_i * (Acc_i * X^{a_i} - Acc_i)$ in operator 411. The operation $s'_i * (Acc_i.X^{a_i} - Acc_i)$ may be the most complex and involve multiple polynomial multiplications between the polynomials composing the encryption of $s'_i$ by secret key $S$ (referred to as Bootstrapping Key or BSK) and the polynomials composing ($Acc_i.X^{a_i} - Acc_i$). There are several methods for executing large polynomial multiplications, including convolutions and Fast Fourier Transforms (FFT). In this example, a Number Theoretic Transform (NTT), an integer-based FFT equivalent, is used. The polynomial coefficients of ($Acc_i.X^{a_i} - Acc_i$) may first be decomposed into smaller elements (levels) by decomposition module 412. This decomposition may reduce the noise introduced by multiplication of BSK coefficients with accumulator coefficients by replacing large multiplications with sums of smaller multiplications. The decomposed polynomial coefficients may then pass through NTT module 413, where they may be multiplied by BSK polynomial coefficients and partially accumulated in module 414. The BSK may be generated by encrypting key $S'$ with key $S$, resulting in a Generalized Gentry/Sahai/Waters (GGSW) encryption for each element of $S'$. The GGSW may be visualized as a matrix of polynomials, and each CMUX operation may require a polynomial vector-matrix multiplication between the decomposed accumulator polynomials and the BSK matrix polynomials.

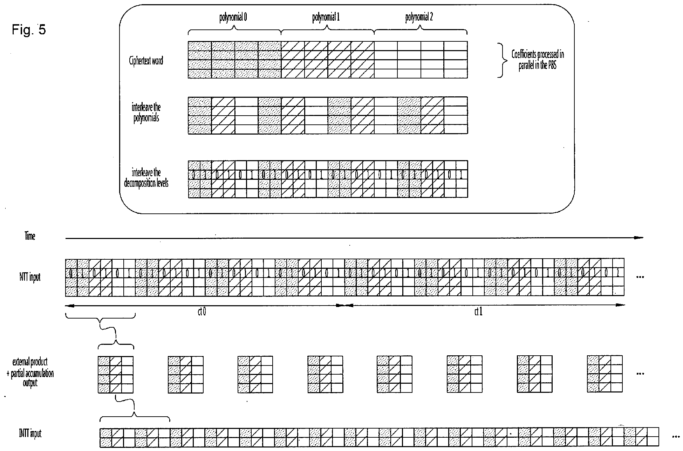

BSK may be written into main memory 403 during the second initialization step, and PBS HPE 400 may contain a BSK cache 415. The size of the BSK cache 415 may be optimized to hide the latency of reading from main memory 403. To ensure optimal performance, the cache may store at least two complete GGSWs for the CMUX being calculated and the next one. Accumulator polynomials may be interleaved within the decomposition 412 and NTT 413 processing pipeline, allowing module 414 to proceed with vector-matrix multiplication and accumulation without additional buffering. Consequently, the number of polynomials requiring Inverse NTT (INTT) calculation may be reduced. Due to hardware resource limitations, it may not be possible to process all accumulator polynomial coefficients simultaneously, so only a subset may be injected per cycle into this pipeline. **Fig. 5** illustrates this optimized processing of accumulator polynomials through the (NTT) processing pipeline. As shown in Fig. 5, if the accumulator comprises a ciphertext (ct0, ct1, ...) comprising three polynomials (A0, A1, B), each with 1024 coefficients and decomposed into two levels (0, 1), the NTT pipeline may be limited to 32 coefficients per cycle. In this case, MMACC 408 may be configured to inject 32 coefficients of A0, followed two cycles later by 32 coefficients of A1 and then two cycles later 32 coefficients of B. Each set of 32 coefficients may be decomposed into two sets of 32 coefficients by the decomposition 412, corresponding to the two levels. Therefore, the NTT may receive 32 coefficients at each cycle. Module 414 may receive these interleaved coefficients from the NTT and accumulate the intermediate results of point-wise multiplication by BSK polynomials, resulting in only three sets of 32 coefficients being sent to the INTT, instead of 18 sets (corresponding to the number of polynomials in GLWE multiplied by the number of polynomials in BSK, times two levels). In this case, 32 coefficients may be produced each two cycles so INTT 416 may be smaller than NTT 413 and process only 16 coefficients per cycle. The polynomials may then pass through INTT module 416 and accumulate in the accumulator memories 407.

With continued reference to Fig. 4, after executing all CMUX operations for each $s_i^I$, the polynomials in the accumulator memories 407 may be rotated one final time by $X^{-b}$. A sample extraction module 417 may then extract the relevant portion of the final state of the blind-rotated LUT and produce an output ciphertext word 418, which may be an encryption of LUT(m) using the main key $S$ (the same key used for input), but with reduced noise compared to input ciphertext word 401.

The performance of PBS HPE 400 may be primarily constrained by hardware resources and the memory bandwidth of main memory 403. Memory bandwidth may limit the number of elements from the KSK and BSK that may be read in time for the key-switch and BSK coefficient product operations. In examples where keys cannot be fully stored in local memories, e.g., SRAM, close to the processing logic, PBS HPE may be configured to process batches of ciphertext words encrypted using the same key. This batching may reduce the memory bandwidth required to read keys, as the same key slice may be shared between multiple ciphertexts, which helps maximize the throughput of PBS HPE. For a given TFHE parameter set defining the sizes of BSK and KSK, the less memory bandwidth available for reading keys from main memory, the larger the required batch size for ciphertext words. However, larger batch sizes may result in incomplete batch processing, particularly during phases where the number of independent PBS instructions is smaller than the batch size.

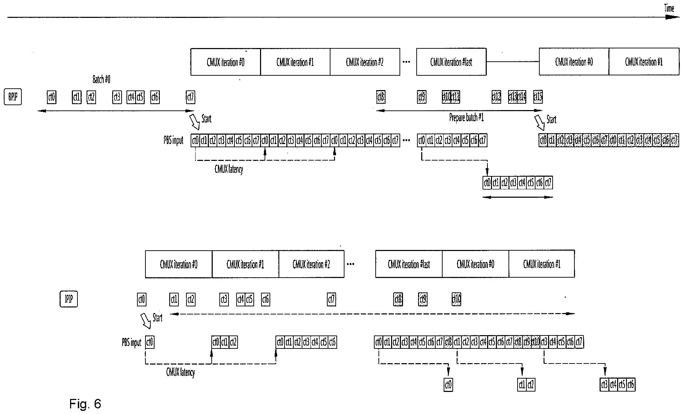

Fig. 6 illustrates two approaches to handling batches by a PBS HPE: Batch PBS Insertion in Pipe (BPIP) and Instant PBS Insertion in Pipe (IPIP). The primary difference between the two approaches may lie in the conditions which may be required to start the blind-rotation computation. In BPIP, blind rotation may only begin when $p'$ ciphertext words are available, preferably when $p'$ equals $p$, with $p$ representing the pipeline capacity. If $p'$ is less than $p$, a timeout or manual trigger via micro-instruction may initiate the process. In this case, all ciphertext words start at index 0 of the $s_i^I * a_i$ iteration, and new ciphertexts may only be processed after the current batch completes. In contrast, IPIP may optimize PBS HPE occupancy by processing a ciphertext word as soon as it is ready and if the pipeline has available capacity. The ciphertext word begins at index $i$ of the $s'_0. a_0$ to $s'_{n-1}. a_{n-1}$ loop, which is currently being computed. The ciphertext word may remain in the pipeline until blind rotation is complete. While IPIP maximizes PBS HPE occupancy, the resulting mask coefficients depend on the starting index $i$, making the resulting polynomial coefficients non-deterministic, even though the message computation remains correct. Based on the application needs, a selection between BPIP and IPIP may be made at run-time.

With continued reference to Fig. 4, it is further noted that the amount of hardware resources available limits the size of the NTT/INTT (413, 416) and the MMACC 408, which directly affects PBS HPE's computation throughput.

Another specific embodiment of the HPU may implement acceleration for the NTRU-based FHE scheme known as FINAL (https://eprint.iacr.org/2022/074). The FINAL scheme may offer very fast programmable bootstrapping, also referred to as functional bootstrapping. The FINAL scheme has been enhanced to handle messages larger than a single bit. The two primary differences between FINAL and TFHE are as follows: First, the ciphertext in FINAL may consist of a single polynomial, making it more compact. Second, the key coefficients used to encrypt the input message may take on more than two values. In particular, the key $f$ may not be a polynomial with binary coefficients (e.g., $s_i \in \{0,1\}$) but rather a polynomial with coefficients $f_i \in [-K,K]$, resulting in $2K + 1$ possible values, where $K$ is a small integer. For example, with $K = 1$, the key coefficients $f_i$ may take values from $\{-1, 0, 1\}$, typically with a Gaussian-like distribution. This added complexity primarily affects the bootstrapping algorithm and the CMUX, which may now need to handle more bootstrapping keys (e.g., 2K BSKs for ternary keys, 2 times the number of BSKs required for binary keys).

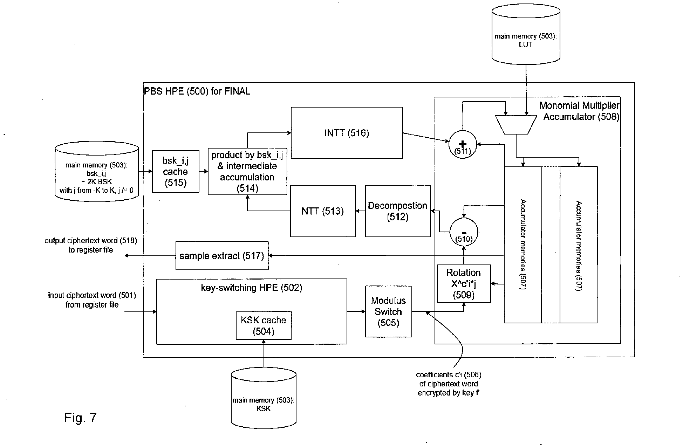

Fig. 7 illustrates an example of a PBS HPE 500 when the HPU is used to accelerate the FINAL scheme. In a similar manner to HPU configured to accelerate TFHE as shown in Fig. 4, the input FINAL ciphertext word 501 may first enter the key-switching module 502, which may read its key-switching key (KSK) from the main memory 503 and store part of it in a KSK cache 504. The key-switching algorithm may closely resemble the one used in TFHE, involving vector-matrix multiplication between the KSK and the input ciphertext word 501. After processing by key-switching module 502, a modulus switch 505 may be applied to all the coefficients of the ciphertext word. This modulus switch 505 operation compresses these coefficients from KS modulus into a smaller modulus. The obtained values are used as rotation factors of the polynomial. This produces coefficients $c'_i$ 506 of a ciphertext word that is now encrypted using a new key $f'$. As in TFHE PBS, a function described as a LUT may be loaded from the main memory 503 into one of the accumulator memories 507. This memory may contain a single polynomial and be used as an accumulator (Acc) for the blind-rotation operation in the MMACC 508. However, in FINAL, the keys may be more complex. The coefficients $f'_i$ may not be binary but may take 2K+1 different values, requiring the accumulator polynomial to be rotated several times for each possible non-zero value of the coefficients $f'_i$.

Thus, the CMUX formula, which in TFHE was expressed as:

$$Acc_{i+1} = Acc_i + s'_i * (Acc_i . X^{a_i} - Acc_i)$$

may be modified for FINAL as follows:

$$Acc_{i+1} = Acc_i \cdot \left( 1 + \sum_{j=-K, j\neq 0}^{K} \left( X^{c'_{i,j}} - 1 \right) * bsk_{i,j} \right)$$

where $bsk_{i,j}$ represents arrays of 2K NTRU-based GSW-like vector encryption (EncVecQ), encrypted using secret key $f$, such that:

$$bsk_{i,j} := \begin{cases} EncVec(1) & f'_i = j \\ EncVec(0) & otherwise \end{cases}$$

If $f'_i = 0$, $bsk_{i,j}$ consists solely of EncVec(0), resulting in:

$$Acc_{i+1} = Acc_i \cdot \left( 1 + \sum_{j=-K, j\neq 0}^{K} \left( X^{c'_{i,j}} - 1 \right) * EncVec(0) \right) = Acc_i$$

If $f'_i = k \in [-K,K]$ where $k \neq 0$, then:

$$Acc_{i+1} = Acc_i \cdot \left( 1 + \left( X^{c'_{i,k}} - 1 \right) * EncVec(1) + \sum_{j=-K, j\neq 0, j\neq k}^{K} \left( X^{c'_{i,j}} - 1 \right) * EncVec(0) \right)$$

$$= Acc_i \cdot \left( 1 + X^{c'_{i,k}} - 1 \right) = Acc_i \cdot X^{c'_{i,k}}$$

The rotation of the accumulator by $X^{c'_{i,j}}$ may be executed in the rotation module 509, and the subtraction from the accumulator may be performed by the subtraction operator 510. The result of the external product may then be accumulated with the contents of the accumulator memory 507 by accumulation operator 511.

In this embodiment, the external product may be implemented similarly to TFHE, with a decomposition module 512, an NTT module 513, and a multiplication of accumulator coefficients by the $bsk_{i,j}$ coefficients, carried out in module 514. The $bsk_{i,j}$ may be read in advance from the main memory 503 and loaded into a cache 515 to provide low-latency access during the multiplication and intermediate accumulation operations performed by module 514. This intermediate accumulation may be used to reduce the number of polynomials that need to pass through the INTT module 516. For efficiency reasons, the value j (the possible value of $f'_i$) may be interleaved. For example, if $f$ is a ternary key ($j \in \{-1, 0, 1\}$), and the embodiment processes 32 polynomial coefficients per cycle in NTT 513, using a single decomposition level, MMACC 508 may inject 32 coefficients of $Acc_i * \left( X^{-c'_i} - 1 \right)$, followed by 32 coefficients of $Acc_i * \left( X^{c'_i} - 1 \right)$, before moving on to the remaining accumulator polynomial. The output polynomials from module 514 may then pass through INTT 516 and may be accumulated into the current content of accumulator memory 507.

In TFHE, all the polynomials of the accumulator may need to go through the NTT, multiply by BSK, and INTT loop for each coefficient of the LWE mask of the ciphertext. In FINAL, the single polynomial of the accumulator may need to go through this loop 2K times for each coefficient of the NTRU-based ciphertext. At the end of these $2K * n$ iterations (where $n$ is the degree of the ciphertext word polynomial), the sample extraction module 517 may execute an addition of a constant polynomial and a modulus-switch on the final content of the accumulator memory 507, resulting in a new ciphertext word 518 encrypted by the original key $f$. This output ciphertext word 518 may contain less noise than the input ciphertext word 501, allowing further processing.

As previously illustrated with reference to Fig. 6, the PBS HPE 500 for the FINAL scheme may be configured to handle a batch of ciphertext words to share the $bsk_{i,j}$ values loaded into the cache, thereby improving throughput. The IPIP mode may also be used to insert a new ciphertext word into the blind-rotation loop after processing any $c'_i * f'_i$ on the current set of ciphertext words undergoing bootstrapping.

The remaining HPU processing elements may be largely similar to those used in the TFHE embodiment. The register file, ALU HPE, and load-store elements may be configured to handle smaller ciphertexts represented by a single polynomial. The HPU controller may remain unchanged from the TFHE implementation.

In general, the HPU may be implemented in various ways, including but not limited to a standalone integrated circuit (IC), such as an ASIC (Application-Specific Integrated Circuit) designed specifically for FHE processing or an FPGA (Field-Programmable Gate Array) allowing for reconfiguration. In some embodiments, the HPU may be included within a multi-chip module (MCM) and packaged together with the CPU, or it may be integrated into a system-on-chip (SoC) design, becoming part of a larger circuit that includes the CPU, memory controllers, and other peripheral units. Other implementation options include integrating the HPU into a heterogeneous computing platform, such as a CPU-GPU system where the HPU functions as a dedicated co-processor for FHE operations. The HPU may also be part of a secure enclave or hardware security module (HSM) designed for cryptographic operations.

The system described in this specification may comprise a single Central Processing Unit (CPU), such as a x86 or ARM or RISC-V-based CPU, but also by a combination or system of such CPUs and/or other types of processing units. The system may comprise a data storage, which may comprise non-volatile memory such as flash memory, a solid-state drive, etc., and which may be used for long-term storage of data. The system may further comprise volatile memory for temporary storage of data. In general, each functional unit of the system may be implemented in the form of a circuit or circuitry. The system may also be implemented in a distributed manner, e.g., involving different devices or apparatuses. The system may comprise the HPU or access an external HPU, for example via interfaces such as Thunderbolt, USB, etc.

It is noted that any of the methods described in this specification, for example in any of the claims, may be implemented on a computer as a computer implemented method, as dedicated hardware, or as a combination of both.

An abstract of the present disclosure may read as follows: a homomorphic processing unit (HPU) may accelerate homomorphic processing operations governed by a homomorphic encryption scheme. The HPU may access encrypted operands from memory, wherein an encrypted operand represents an encryption of unencrypted data by the homomorphic encryption scheme, wherein the encrypted operand is represented by a set of ciphertext words. The HPU may include a controller to access instructions for operations to be performed on encrypted operands and convert them into micro-instructions for operations to be performed on ciphertext words. The HPU may further comprise a register memory and multiple execution units that may be invoked in parallel by executing micro-instructions. The execution units may include a load/store unit for transferring ciphertext words, an arithmetic logic unit for performing arithmetic operations, and at least one ciphertext transformation unit configured to modify ciphertext words in compliance with the homomorphic encryption scheme.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A homomorphic processing unit (104, 200) configured to accelerate homomorphic processing operations governed by a homomorphic encryption scheme, wherein the homomorphic encryption scheme is parameterized by a parameter set, the homomorphic processing unit comprising:

   - a memory interface to a memory (202) configured to store encrypted operands, wherein an encrypted operand represents an encryption of unencrypted data by the homomorphic encryption scheme, wherein the encrypted operand is represented by a set of ciphertext words, each ciphertext word encoding a portion of the unencrypted data and having a size determined by the parameter set;
   - a controller (205, 300) configured to access instructions for the homomorphic processing unit to perform operations on a respective encrypted operand, wherein the controller is further configured to convert the instructions into micro-instructions for execution units of the homomorphic processing unit to perform operations on ciphertext words of the respective encrypted operand;
   - a register memory (209) configured to store one or more ciphertext words;
   - a plurality of execution units (307) which are separately and in parallel invokable by execution of respective micro-instructions, the plurality of execution units comprising:

- a load/store unit (207, 306) configured to transfer ciphertext words between the memory and the register memory;
- an arithmetic logic unit (210) configured to perform arithmetic operations on ciphertext words stored in the register memory; and
- at least one ciphertext transformation unit (211, 212, 400, 500) configured to modify ciphertext words stored in the register memory in compliance with a structure of the ciphertext words, as defined by the homomorphic encryption scheme, to maintain usability of the ciphertext words during the execution of the homomorphic processing operations.

2. The homomorphic processing unit (104, 200) according to claim 1, wherein the at least one ciphertext transformation unit (211, 212, 400, 500) comprises a pipeline composed of a plurality of stages to enable multiple ciphertext words to be processed in parallel across the plurality of stages of the pipeline, wherein the pipeline comprises an input stage, and wherein the controller (205, 300) is configured to generate the micro-instructions to invoke execution of the at least one ciphertext transformation unit when the input stage is ready to receive a ciphertext word.

3. The homomorphic processing unit (104, 200) according to claim 2, wherein the pipeline comprises one or more of: a key-switching or re-linearization stage, a modulus switch stage, and a bootstrapping stage configured to refresh ciphertext words, wherein the bootstrapping stage is optionally configured to evaluate a function as part of a bootstrapping process.

4. The homomorphic processing unit (104, 200) according to claim 3, wherein the key-switching or re-linearization stage is configured to provide coefficients to the bootstrapping stage at a rate that prevents stalls in the pipeline at the bootstrapping stage.

5. The homomorphic processing unit (104, 200) according to any one of claims 1 to 4, wherein the at least one ciphertext transformation unit (211, 212, 400, 500) is or comprises a bootstrapping unit configured to refresh ciphertext words.

6. The homomorphic processing unit (104, 200) according to any one of claims 1 to 5, wherein the at least one ciphertext transformation unit further comprises a separately invokable key-switching or re-linearization unit (212).

7. The homomorphic processing unit (104, 200) according to any one of claims 1 to 6, wherein at least one of the plurality of execution units (307) is configured to:

- access one or more encryption parameters of the homomorphic encryption scheme that influence the structure of the ciphertext words; and
- adapt, at runtime, its operation to the structure of the ciphertext words based on the one or more encryption parameters.

8. The homomorphic processing unit (104, 200) according to any one of claims 1 to 7, wherein the controller (205, 300) is configured to schedule the execution of the plurality of execution units in parallel to optimize utilization of available execution units.

9. The homomorphic processing unit (104, 200) according to any one of claims 1 to 8, wherein the plurality of execution units comprises multiple instances of a same type of execution unit, such as multiple instances of the arithmetic logic unit (210) and/or multiple instances of a ciphertext transformation unit (211, 212, 400, 500).

10. The homomorphic processing unit (104, 200) according to any one of claims 1 to 9, wherein the memory (202) further stores homomorphic encryption data, such as keys for bootstrapping, re-encryption, or key-switching operations, and/or look-up tables, wherein the at least one ciphertext transformation unit is configured to retrieve the homomorphic encryption data from the memory for use in homomorphic processing operations.

11. The homomorphic processing unit (104, 200) according to any one of claims 1 to 10, wherein the memory is on-chip with the homomorphic processing unit or off-chip.

12. The homomorphic processing unit (104, 200) according to any one of claims 1 to 11, wherein the homomorphic encryption scheme, for which the homomorphic processing operations are accelerated, is one of: Torus Fully Homomorphic Encryption (TFHE), Fastest Homomorphic Encryption in the West (FHEW), Cheon-Kim-Kim-Song (CKKS), Brakerski-Gentry-Vaikuntanathan (BGV), Faster FHE instantiated with NTRU and LWE (FINAL), or an Nth Degree Truncated Polynomial Ring Units (NTRU) scheme.

13. A system (100) comprising the homomorphic processing unit (104) according to any one of claims 1 to 12.

14. The system (100) according to claim 13, comprising a central processing unit (101) configured to generate the ciphertext words for the homomorphic processing unit (104) and to retrieve resulting processed ciphertext words from the homomorphic processing unit.

15. The system (100) according to claim 13 or 14, comprising multiple instances of the homomorphic processing unit (104), wherein the multiple instances of the homomorphic processing unit are configured to cooperate to jointly perform the homomorphic processing operations.

System 100

Application (103)

FHE software library (102)

CPU (101)

Instructions (105)
&
encrypted operands (106)

HPU (104)

encrypted results (107)

Fig. 1

Fig. 2

HPU Controller 300

Load/Store
HPE (306)

Instructions (302)

Instruction Translator
(301)

Ciphertext words
micro-instructions
(304)

Instruction Scheduler
(305)

HPE 1 (307)

HPE 2

HPE N

instruction
micro-code
firmware (303)

Fig. 3

Fig. 4

Fig. 5

Fig. 6

PBS HPE (500) for FINAL

main memory (503):
bsk_i,j
~ 2K BSK
with j from -K to K, j /= 0

bsk_i,j
cache
(515)

product by bsk_i,j
& intermediate
accumulation
(514)

INTT (516)

main memory (503):
LUT

Monomial Multiplier
Accumulator (508)

+
(511)

NTT (513)

Decompostion
(512)

Accumulator memories (507)

Accumulator memories (507)

output ciphertext word (518)
to register file

sample extract (517)

–
(510)

input ciphertext word (501)
from register file

key-switching HPE (502)

KSK cache
(504)

Rotation
X^c'i*j
(509)

Modulus
Switch
(505)

coefficients c'i (506)
of ciphertext word
encrypted by key f'

main memory (503):
KSK

Fig. 7

**EUROPEAN SEARCH REPORT**

Application Number

EP 24 31 5543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/255721 A1 (REN XUANLE [CN]) 11 August 2022 (2022-08-11) * paragraph [0088] - paragraph [0106]; figures 2, 3 * ----- | 1-15 | INV. H04L9/00 |
| A | ZHANG JUNXUE ET AL: "SoK: Fully Homomorphic Encryption Accelerators", ACM COMPUTING SURVEYS, ACMPUB27, NEW YORK, NY, 5 July 2024 (2024-07-05), XP059502705, ISSN: 0360-0300, DOI: 10.1145/3676955 * Section 3, 5; figure 1 * ----- | 1-15 | |

TECHNICAL FIELDS SEARCHED (IPC)

H04L

The present search report has been drawn up for all claims

| Place of search | Date of completion of the search | Examiner |
|---|---|---|
| Munich | 23 April 2025 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 31 5543

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2025

| Patent document cited in search report | Publication date | Patent family member(s) | Publication date |
|---|---|---|---|
| US 2022255721 A1 | 11-08-2022 | CN 114816334 A<br>US 2022255721 A1 | 29-07-2022<br>11-08-2022 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20240056286 A1
- US 20240022393 A1
- US 20210111863 A1
- US 20230327849 A1
- US 20230216655 A1
- US 20200213079 A1